# FASCICULE DE BREVET EUROPEEN

(11) **EP 0 439 416 B1**
(45) Date de publication et mention de la délivrance du brevet: **04.08.1993**
(21) Numéro de dépôt: 91420020.9
(22) Date de dépôt: 24.01.1991
(51) Int. Cl.: B60N 2/06

(54) **Glissière pour siège de véhicule**
Schiene für einen Fahrzeugsitz
Slide for a vehicle seat

(30) Priorité: 26.01.1990 FR 9000905
(43) Date de publication de la demande: 31.07.1991
(73) Titulaire: CESA COMPAGNIE EUROPEENNE DE SIEGES POUR AUTOMOBILES, 92300 Levallois-Perret (FR)
(72) Inventeur: Halot, Philippe, F-45490 Gondreville La Franche (FR); Tricquet, Alain, F-95320 Saint Leu La Forêt (FR)
(74) Mandataire: Moncheny, Michel

(56) Documents cités:
- DE-A- 2 422 210
- DE-U- 7 319 398
- FR-A- 2 606 339
- GB-A- 2 139 485
- GB-A- 2 191 686

## Description

La glissière suivant l'invention concerne la liaison coulissante dans le sens longitudinal entre les sièges et le plancher d'un véhicule. Cette glissière s'applique aux sièges individuels et peut également s'appliquer aux banquettes comportant plusieurs emplacements formant siège.

On connaît de nombreux modèles de glissières comportant, de façon générale, un élément fixe solidaire du plancher du véhicule et un élément mobile solidaire de l'assise du siège. Ces éléments sont le plus souvent des profilés, orientés dans le sens longitudinal du véhicule, l'élément mobile coulissant par rapport à l'élément fixe. Des moyens de verrouillage permettent de bloquer l'élément mobile par rapport à l'élément fixe dans la position longitudinale souhaitée. Chaque siège individuel comporte généralement deux glissières disposées de chaque côté de celui-ci.

On constate que le jeu nécessaire entre élément fixe et mobile pour permettre au siège de coulisser facilement est une cause de cliquetis et autres bruits gênants lorsque le véhicule se déplace, en particulier dans le cas où le siège est inoccupé ou lorsqu'on effectue le réglage longitudinal de la position du siège. L'utilisation de billes ou de rouleaux de types divers pour faciliter le glissement de l'élément mobile ne supprime pas ces bruits qui vont en s'aggravant avec l'usure et les déformations progressives des composants de chaque glissière, comme par exemple le marquage alvéolaire des profilés par les billes.

Il a été proposé d'intercaler entre l'élément fixe et l'élément coulissant de la glissière, constitués chacun par un profilé métallique, une couche d'une matière plastique pour réduire le cliquetis. Un certain résultat est ainsi obtenu, mais on constate bien souvent un frottement excessif qui nuit à la douceur de manoeuvre recherchée. De plus la liaison entre la matière plastique et la pièce métallique à laquelle elle est fixée peut ne pas présenter une tenue suffisante. Ainsi le document DE GM 7319398 décrit une glissière pour siège de véhicule comportant un élément fixe de guidage et un élément mobile coulissant à l'intérieur de celui-ci qui permet d'éviter les contacts entre ces deux pièces métalliques. Pour cela l'élément fixe de guidage est revêtu sur toute sa longueur d'un revêtement de matière plastique sur lequel coulisse l'élément mobile. Selon le document DE AS 2422210 ce glissement d'un métal sur de la matière plastique entraîne la formation d'empreintes plus ou moins profondes qui font ensuite obstacle à un glissement régulier.

Pour remédier à cela ce document propose de revêtir de matière plastique l'élément métallique mobile de la glissière. Suivant l'exemple qui est donné l'élément mobile métallique est disposé sur chant et monté coulissant dans un élément métallique fixe ayant une section en C. Les bords supérieur et inférieur de l'élément mobile sont revêtus chacun d'une couche de matière plastique de section en forme de crochet, ces couches supérieure et inférieure étant reliées entre elles par une bande latérale de matière plastique qui revêt ainsi la face latérale correspondante de l'élément mobile. L'autre face non revêtue de cet élément mobile est reliée à l'assise du siège. Afin de limiter les jeux, le crochet en plastique entourant le bord supérieur est entaillé de façon à former une languette élastique qui vient en appui contre la paroi intérieure de l'élément fixe, réduisant ainsi le jeu.

L'expérience montre qu'une telle disposition est mal adaptée au cas où le siège est dépourvu d'occupant car il tend alors à se soulever à chaque cahot et la languette élastique qui est décrite ne permet pas de les amortir. Par ailleurs la charge appliquée par le bord inférieur de relativement faible épaisseur sur le crochet en plastique correspondant, quand le siège est occupé, risque d'être excessive et d'entraîner une pénétration progressive de ce bord inférieur dans la couche de matière plastique qui le recouvre.

On a recherché les moyens d'éviter les phénomènes de cliquetis dûs aux contacts répétés entre les deux éléments métalliques, fixe et mobile, qui coopèrent dans une glissière de siège de véhicule, sans avoir à faire appel à des composants usinés avec une grande précision montés coulissant l'un par rapport à l'autre avec de très faibles jeux et nécessitant des lubrifiants fluides. On a recherché aussi la possibilité d'éviter la corrosion de ces composants métalliques frottant l'un contre l'autre, sans avoir à faire appel à des aciers ou alliages inoxydables de coût élevé. On a cherché enfin les moyens de mettre en oeuvre des matières plastiques comme composant intermédiaire entre des éléments métalliques fixes et mobiles d'une glissière pour éviter les bruits dûs aux chocs entre ces éléments sans subir les inconvénients qui viennent d'être précisés de ces matières plastiques.

On a cherché en premier lieu les moyens permettant de rattraper les jeux existants ou résultant de l'usure tout en conservant une excellente aptitude au réglage de l'élément mobile par rapport à l'élément fixe. On a cherché en particulier à limiter les jeux au minimum sans subir de façon excessive les inconvénients du médiocre coefficient de frottement de ces matières plastiques.

On a cherché aussi les moyens de réaliser un verrouillage facile et efficace de la position longitudinale de l'élément mobile par rapport à l'élément fixe de la glissière. On a cherché enfin les moyens d'éviter en cas d'arrêt brutal du véhicule la séparation par arrachement de l'élément mobile hors de l'élément fixe sous l'action de la force de traction de la ceinture de sécurité reliée en au moins un point à l'assise du siège.

On a cherché également à rendre la fabrication de l'ensemble des éléments fixes et mobiles particulièrement aisée sans devoir maintenir des tolérances dimensionnelles réduites pour les parties métalliques.

La glissière pour siège de véhicule qui fait l'objet de l'invention permet d'éviter les cliquetis et autres bruits résultant des heurts entre l'un des éléments de glissière et l'autre, lorsque le véhicule se déplace, en particulier dans les cas où le siège est inoccupé ou lorsque l'on effectue le réglage longitudinal du siège. Elle permet, plus particulièrement, d'assurer une compensation élastique des jeux existants, ainsi que de ceux qui pourront se développer par la suite. Cette glissière est apte à fonctionner avec des jeux relativement faibles sans nécessiter des efforts excessifs ; elle est apte également à un verrouillage efficace et pratiquement instantané dans un large intervalle de réglage. En outre dans le cas où la ceinture de sécurité est reliée à l'assise du siège en au moins un point, des moyens de reprise d'effort peuvent éviter l'arrachage de l'élément mobile de la glissière en cas de choc violent. Enfin la fabrication industrielle de la glissière est particulièrement facile et économique.

Cette glissière pour siège de véhicule comporte un élément longitudinal fixe, solidarisé avec le plancher de ce véhicule et un élément mobile, solidarisé avec l'assise du siège. L'élément fixe est un profilé creux dans lequel est engagée la partie coulissante de l'élément mobile laquelle est reliée à l'assise du siège à travers une ouverture longitudinale du profilé creux. Suivant l'invention le profilé creux qui constitue l'élément fixe de la glissière a une section générale en U ; la base de ce U est solidarisée avec le plancher par des moyens de fixation et les deux bras du U comportent chacun au moins une rainure dans laquelle est engagée une nervure latérale d'un patin en matière plastique, lequel muni d'une armature métallique intérieure qui en est solidaire, constitue la partie de l'élément mobile coulissant à l'intérieur de l'élément fixe ; cette armature métallique qui comporte des prolongements engagés dans chaque nervure latérale est reliée à l'assise du siège à travers l'ouverture longitudinale qui existe entre les deux bras du U ; les nervures latérales du patin comportent des moyens élastiques de rattrapage des jeux qui coopèrent avec les parois en regard des rainures correspondantes pour assurer un contact élastique.

De préférence, les moyens élastiques de rattrapage des jeux comprennent des surépaisseurs formées sur les nervures latérales du patin dans les zones qui s'engagent dans les rainures ; ces surépaisseurs coopèrent avec des évidements réalisés dans leur voisinage, dans les nervures latérales, de façon à assurer un contact élastique avec les parois en regard des rainures correspondantes.

De préférence également, l'armature métallique de l'élément mobile est constituée d'une lame unique qui comporte à son extrémité inférieure au sein de la matière plastique, des pattes repliées latéralement, les unes d'un côté les autres de l'autre de façon à armer les nervures latérales du patin. De préférence, ces pattes sont repliées sensiblement à angle droit.

De préférence, le patin en matière plastique est solidarisé avec l'armature métallique grâce à une réalisation par surmoulage. De préférence également, les surépaisseurs qui assurent l'appui élastique des nervures du patin dans les rainures sont formées d'une part sur les bords latéraux de ces nervures et orientées en direction du fond des rainures et d'autre part formées au voisinage des bords latéraux des nervures mais orientées de façon sensiblement verticale en direction des parois en regard des rainures.

De préférence, la hauteur maximale de chaque surépaisseur, mesurée en l'absence de contraintes, est comprise entre 4 et 10 % de la largeur correspondante de la rainure au droit de cette épaisseur.

De préférence également la matière plastique utilisée pour réaliser le patin comporte un additif permettant d'améliorer le coefficient de frottement. De façon avantageuse cet additif est du bisulfure de molybdène à une teneur d'environ 0,5 à 5 %.

De préférence également la matière plastique utilisée pour réaliser le patin comporte un additif permettant d'accroître ses caractéristiques mécaniques tel que par exemple de la fibre de verre à une teneur de 5 à 60 %.

De préférence on effectue le verrouillage de la position relative de l'élément mobile par rapport à l'élément fixe au moyen d'un verrou basculant articulé par rapport à l'assise du siège qui coopère avec une crémaillère solidaire de l'élément fixe. De façon avantageuse les dents de cette crémaillère sont réalisées sur le bord d'extrémité de l'une des deux branches du U et le verrou basculant est articulé dans la zone de liaison entre l'armature de l'élément mobile et l'assise du siège et un levier de commande permet de l'ouvrir tandis qu'un ressort de rappel provoque le verrouillage.

De façon avantageuse on utilise une ceinture de sécurité comportant au moins un moyen de fixation solidarisé avec l'assise du siège et on dispose autour de l'élément fixe un étrier de reprise d'efforts dont les crochets ouverts en permanence ont une largeur d'ouverture inférieure à la largeur maximale de la section de l'élément au niveau des rainures transversales. Ces crochets sont disposés avec un jeu suffisant pour pouvoir se déplacer avec l'élément mobile sans frotter sur les parois de l'élément fixe. Au lieu de deux crochets entourant l'élément fixe partiellement, on peut aussi disposer deux crochets en prise l'un sur l'autre mais avec un jeu suffisant pour pouvoir coulisser sans contact, l'un solidaire de l'élément fixe et l'autre de l'élément mobile ou de l'assise, au voisinage du point de fixation de la ceinture de sécurité, l'un au moins de ces deux crochets étant un profilé de longueur suffisante pour maintenir l'engagement des deux crochets dans le domaine de réglage de la glissière.

Les exemples et les figures ci-après décrivent, de façon non limitative des modes de réalisation de la glissière pour siège de véhicule suivant l'invention.

La figure 1 est une vue schématique en élévation et en coupe suivant un plan perpendiculaire à l'axe longitudinal d'une glissière pour siège de véhicule suivant l'invention.

La figure 2 est une vue agrandie en élévation et en coupe suivant le même plan que celui de la figure 1 de la partie coulissante de l'élément mobile de la glissière suivant l'invention faisant apparaître les zones en surépaisseurs et les évidements des nervures.

La figure 3 est une vue schématique, suivant la flèche F1 de la figure 2, d'un tronçon de la partie coulissante de l'élément mobile.

La figure 4 est une vue schématique, de dessus, du tronçon de la figure 3.

La figure 5 est une vue schématique de dessus du dispositif de verrouillage permettant le blocage de l'élément mobile de la glissière suivant l'invention par rapport à l'élément fixe.

La figure 6 est une vue schématique d'un étrier de reprise d'effort disposé autour de l'élément fixe de la glissière suivant l'invention.

La figure 7 est une vue schématique d'un moyen de reprise d'effort comportant deux crochets en prise l'un dans l'autre.

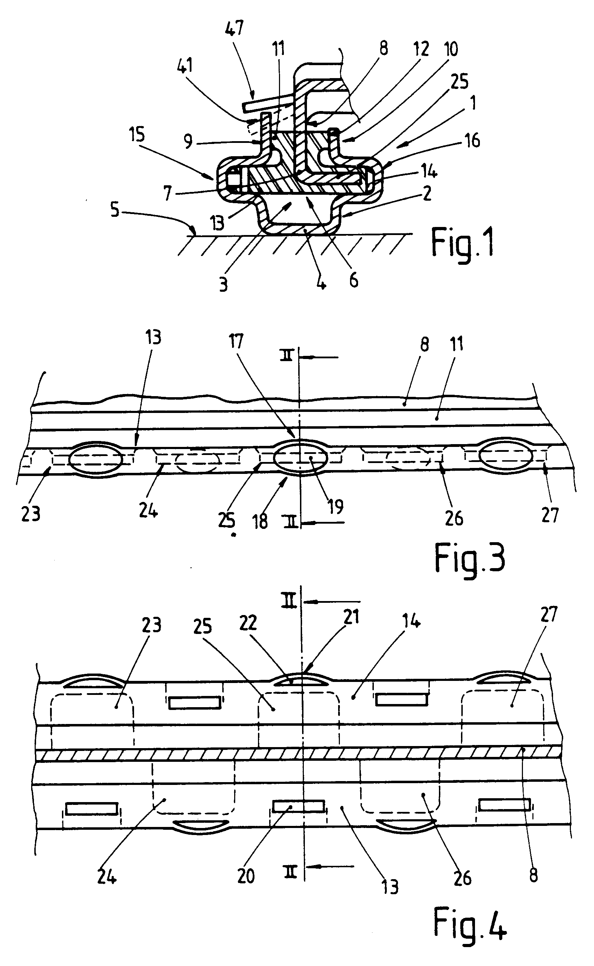

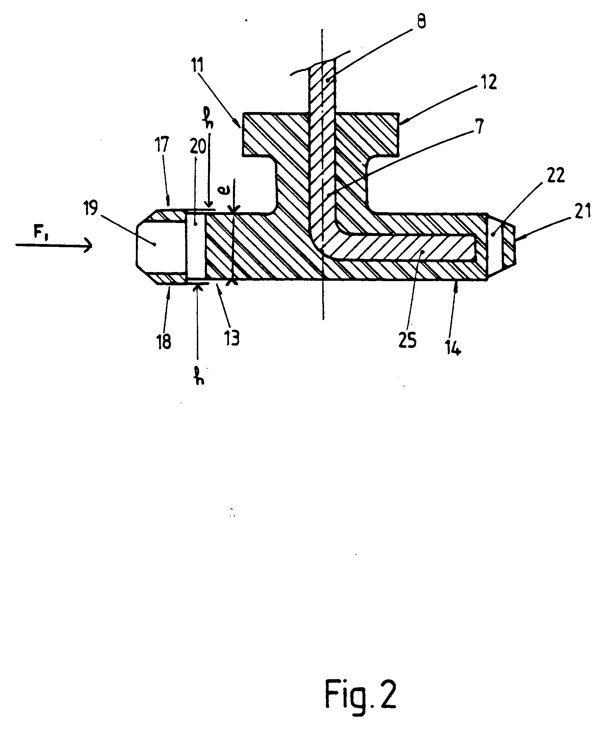

On voit figure 1 une coupe transversale d'une glissière 1, pour siège de véhicule, suivant l'invention. Elle comporte un élément fixe 2 constitué par un profilé creux ayant une forme générale en U à l'intérieur duquel est monté coulissant l'élément mobile 3. L'axe perpendiculaire au plan de la figure est sensiblement parallèle à l'axe longitudinal du véhicule. Cette glissière 1 est disposée, dans le cas du présent exemple, sur le côté gauche d'un siège individuel et coopère avec une autre glissière disposée de l'autre côté. L'élément fixe 2 est solidarisé par sa base 4 avec le plancher 5 du véhicule, grâce à des moyens de liaison, tels que des boulons non représentés. L'élément mobile 3 comporte un patin 6 en matière plastique muni d'une armature 7 constituée par l'extrémité inférieure du profilé métallique 8. Ce profilé traverse l'ouverture longitudinale qui sépare les deux bras latéraux 9, 10 de l'élément fixe 2, bras latéraux le long desquels coulissent les bords supérieurs 11, 12 du patin 6. Le profilé métallique 8 se raccorde à sa partie supérieure à l'assise non représentée du siège. Le patin 6 comporte deux nervures latérales 13, 14 qui s'engagent dans des rainures 15, 16 formées par pliage des bras latéraux 9, 10 assurant ainsi le guidage de l'élément mobile 3 et donc du siège du véhicule. Afin de limiter les jeux, les nervures 13, 14 comportent des surépaisseurs au voisinage de leurs extrémités qui viennent en appui élastique contre les parois en regard des rainures 15, 16. L'élasticité de ces surépaisseurs est obtenue grâce à des évidements réalisés dans la zone sous-jacente des nervures. Ainsi on voit figure 2 les surépaisseurs 17, 18 réalisées au voisinage de l'extrémité de la nervure 13. Les évidements 19 et 20 qui apparaissent également aux figures 3 et 4 sur lesquelles le plan de coupe de la figure 2 est indiqué par la ligne II-II, confèrent, à ces surépaisseurs 17, 18 dont la figure 3 montre la courbure orientée vers le haut ou vers le bas, une grande élasticité et par conséquent une aptitude particulière au retour élastique. De la même façon la surépaisseur 21 réalisée à l'extrémité de la nervure 14 coopère avec un évidement 22, réalisé dans la zone immédiatement sous-jacente, de façon que sa face frontale courbée en direction du fond de la rainure 16 vienne contre celui-ci en appui élastique. Ainsi la coopération de ces surépaisseurs qui prennent appui contre les parois des rainures verticalement et horizontalement garantit une excellente stabilité du patin 6 et le rattrapage général des jeux et de l'usure et des déformations éventuelles de ce patin 6 et de l'élément fixe 2. Cela permet en particulier d'éviter d'avoir à réaliser les éléments métalliques 2 et 8 avec des tolérances dimensionnelles de fabrication réduites.

Comme on le voit aux figures 3 et 4 des surépaisseurs telles que 17, 18 sont réparties alternativement le long des nervures 13 ou 14 et il en est de même pour les surépaisseurs en bord de nervure telles que 21. Cette alternance correspond, dans le mode de réalisation représenté, à la répartition alternative des pattes 23, 24, 25, 26, 27 repliées à 90° tantôt d'un côté tantôt de l'autre de façon à armer également les nervures 13 ou 14.

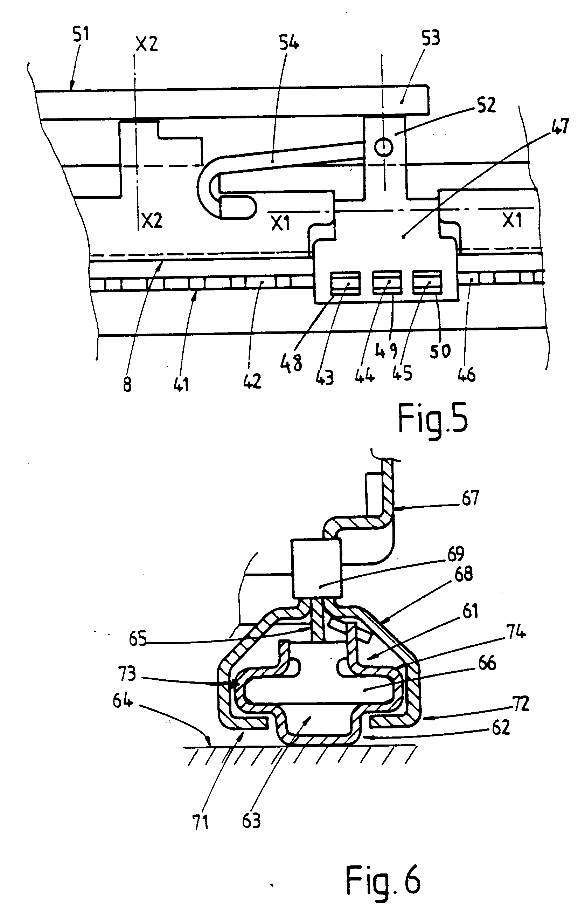

Un mode de verrouillage efficace de la position relative de l'élément mobile 3 par rapport à l'élément fixe 2 est montré aux figures 1 et 5. Ce dispositif comprend une crémaillère 41 munie de dents telles que 42, 43, 44, 45, 46 réalisées sur le bord supérieur du bras 9 de l'élément fixe 2. A cette crémaillère 41 correspond un verrou 47 monté basculant autour d'un axe X1-X1 dans la zone de liaison entre l'extrémité supérieure du profilé métallique 8 et l'assise non représentée du siège. Ce verrou 47 est muni de gâches 48, 49, 50 dans lesquelles s'engagent les dents telles que 43, 44, 45 formant pênes de la crémaillère 41. Le basculement du verrou 47 est commandé par un levier 51 dont la tige, représentée de façon seulement partielle, est montée en rotation autour de l'axe X2-X2 et permet ainsi de pousser vers le haut ou vers le bas l'extrémité 52 du verrou 47 grâce à une liaison articulée non représentée entre cette extrémité 52 et l'extrémité 53 du levier 51. En l'absence d'action sur le levier 51, un ressort 54 maintient le verrou 47 en prise avec la denture de la crémaillère 41.

Il est avantageux pour la réalisation du patin 6 de faire appel à une matière plastique dont le coefficient de frottement n'est pas trop élevé. On peut abaisser ce coefficient de frottement en incorporant dans certaines matières plastiques des additifs convenables tels que le bisulfure de molybdène. On utilise avantageusement à titre d'exemple pour réaliser le patin 6 un polyamide, un polyacétal, un polycarbonate ou encore d'autres matières plastiques. On peut aussi introduire dans ces matières plastiques des charges permettant d'accroître leur module d'élasticité telles que par exemple des fibres de verre.

Dans le cas du patin 6 on utilise avantageusement un polyamide additionné de 1,5 % de Mo S2 qui peut être chargé de 30 % de fibre de verre.

La figure 2 fait apparaître la hauteur des surépaisseurs telles que 17, 18 par rapport à la largeur correspondante de la rainure. Dans le cas de cette figure la largeur de la rainure est pratiquement égale à l'épaisseur "e" de la nervure 13. Les deux surépaisseurs 17, 18 ont chacune une hauteur maximale "h", en l'absence de contrainte, hauteur "h" dont la valeur est comprise entre 4 et 10 % de la largeur correspondante "e" de la rainure au droit de ces surépaisseurs. Cette valeur "h" est déterminée, à l'intérieur de cet intervalle, en fonction des caractéristiques mécaniques de la matière plastique utilisée et des dimensions des nervures et des évidements.

Le patin 6 en matière plastique peut être obtenu par surmoulage sur l'armature 7. Outre sa géométrie particulière, qui a été décrite précédemment et lui permet de rattraper les jeux et l'usure des pièces, ledit patin assure la continuité physique de l'élément mobile 3 que ne lui garantit pas à elle seule l'armature 7 du fait qu'elle est constituée d'une plaque unique ayant des pattes 23, 24, 25, 26, 27 repliées alternativement à gauche et à droite. Cela évite d'avoir à réaliser des éléments 7, 8, 2 dimensionnellement très précis, la forme précise définitive de l'élément mobile 3 étant obtenue par le surmoulage et les variations de tolérances de l'élément fixe 2 étant compensées par les moyens élastiques tels que 17, 18, 19, 21, 22.

Le repliement des pattes 23, 24, 25, 26, 27 de l'armature 7 permet, bien que celle-ci soit constituée d'une seule plaque, de maintenir la symétrie de la construction de l'élément mobile 3.

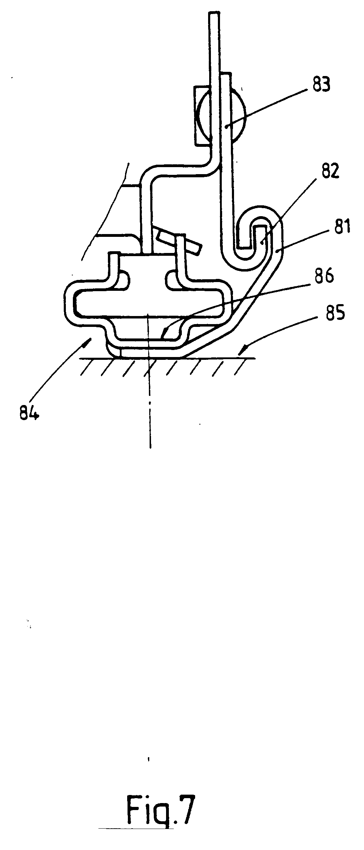

Il est possible d'équiper la glissière 1 d'un moyen de sécurité permettant en cas de choc brutal de renforcer la tenue d'une ceinture de sécurité comportant un moyen de fixation solidarisé avec l'assise du siège. Il est nécessaire pour cela d'éviter les risques d'arrachement de l'élément mobile 3 de son logement à l'intérieur de l'élément fixe 2. Les figures 6 et 7 représentent deux modes particuliers de réalisation d'un tel moyen de sécurité.

La figure 6 montre une glissière 61 semblable à la glissière 1 des figures précédentes si ce n'est qu'il s'agit d'une glissière pour le côté droit du siège. Elle comporte un élément fixe 62 et un élément mobile 63 représentés de façon purement schématique. L'élément fixe est relié au plancher 64 du véhicule par des moyens connus non représentés. Le profilé métallique 65, qui arme le patin 66, est relié à l'assise du siège et également à l'extrémité inférieure 67 d'un moyen de fixation d'une ceinture de sécurité à l'assise. Un étrier de reprise d'efforts, 68 est solidarisé en 69 avec le profilé métallique 65. Cet étrier comporte des crochets 71, 72 qui entourent les bras 73, 74, de l'élément fixe avec un jeu suffisant pour pouvoir accompagner le coulissement de l'élément mobile 63 sans frotter sur les parois des bras. C'est seulement en cas d'effort d'arrachement de grande intensité que les crochets 71, 72 viennent en prise avec la paroi en regard des bras et empêchent l'arrachement de l'élément mobile 63.

La figure 7 représente un autre mode de réalisation du moyen de reprise d'efforts. Dans le cas de cette figure ce moyen de reprise d'efforts est constitué par deux crochets 81, 82 montés en prise l'un sur l'autre avec un jeu suffisant pour ne pas faire obstacle au libre coulissement du crochet 82, solidarisé par la zone de liaison 83 avec l'assise du siège et le moyen de fixation de la ceinture de sécurité, par rapport à l'élément fixe. Le crochet 81 est un profilé métallique parallèle à la glissière 84 et dont la longueur est suffisante pour que le crochet 82 reste en prise avec lui. Ce crochet 81 est fixé au plancher 85 du véhicule comme la base 86 de l'élément fixe.

De très nombreuses variantes ou modifications peuvent être apportées à la glissière suivant l'invention, qui ne sortent pas du domaine de celle-ci. Les exemples qui viennent d'être décrits ne sont que des modes particuliers de réalisation.

## Revendications

1. Glissière (1) pour siège de véhicule comportant un élément longitudinal fixe (2) solidarisé avec le plancher du véhicule et un élément mobile (3) solidarisé avec l'assise du siège, l'élément fixe étant un profilé creux dans lequel est engagée la partie coulissante de l'élément mobile laquelle est reliée à l'assise du siège à travers une ouverture longitudinale du profilé creux caractérisée en ce que l'élément fixe (2) a une section générale en U dont la base (4) est solidarisée avec le plancher (5) du véhicule et dont les deux bras (9, 10), comportent chacun au moins une rainure (15, 16) dans laquelle est engagée une nervure latérale (13, 14) d'un patin en matière plastique (6) qui est solidaire d'une armature métallique intérieure (7), munie de prolongements (23, 24, 25, 26, 27) engagés dans chaque nervure latérale, l'armature métallique étant reliée à l'assise à travers l'ouverture longitudinale existant entre les deux branches du U, les nervures latérales du patin comportant des moyens élastiques de rattrapage des jeux (17, 18, 21) qui coopèrent avec les parois en regard des rainures correspondantes pour assurer un contact élastique.

2. Glissière suivant revendication 1 caractérisée en ce que les moyens élastiques de rattrapage des jeux comprennent des surépaisseurs (17, 18, 21) formées sur les nervures latérales (13, 14) du patin (6) dans les zones qui s'engagent dans les rainures (15, 16), ces surépaisseurs coopérant avec des évidements (19, 20, 22) réalisés dans leur voisinage, dans les nervures latérales, de façon à assurer un contact élastique avec les parois en regard des rainures correspondantes.

3. Glissière suivant revendication 1 ou 2 caractérisée en ce que l'armature métallique (7) de l'élément mobile (3) est constituée d'une lame unique qui comporte à son extrémité inférieure, au sein de la matière plastique, des pattes (23, 24, 25, 26, 27) repliées latéralement, les unes d'un côté les autres de l'autre, de façon à armer les nervures latérales (13, 14) du patin (6).

4. Glissière suivant revendication 3 caractérisée en ce que les pattes (23, 24, 25, 26, 27) sont alternativement repliées d'un côté puis de l'autre des nervures du patin (6).

5. Glissière suivant l'une des revendications 1 à 4 caractérisée en ce que le patin en matière plastique est solidarisé avec l'armature métallique par surmoulage.

6. Glissière suivant l'une des revendications 1 à 5 caractérisée en ce que les surépaisseurs sont formées d'une part sur les bords latéraux des nervures et orientées en direction du fond des rainures et d'autre part au voisinage de ces bords latéraux des nervures mais orientées en direction des parois en regard des rainures.

7. Glissière suivant revendication 6 caractérisée en ce que la hauteur maximale de chaque surépaisseur (17, 18) mesurée en l'absence de contraintes, est comprise entre 4 et 10 % de la largeur correspondante de la rainure au droit de cette surépaisseur.

8. Glissière suivant l'une des revendications 1 à 7 caractérisée en ce que la matière plastique du patin comporte un additif permettant d'abaisser le coefficient de glissement.

9. Glissière suivant revendication 8 caractérisée en ce que l'additif est du bisulfure de molybdène à une teneur d'environ 0,5 à 5 %.

10. Glissière suivant l'une des revendications 1 à 9 caractérisée en ce que la matière plastique du patin comporte un additif permettant d'accroître ses caractérisques mécaniques.

11. Glissière suivant revendication 10 caractérisée en ce que l'additif est des fibres de verre à une teneur d'environ 5 à 60%.

12. Glissière suivant l'une des revendications 1 à 11 caractérisée en ce qu'elle comporte un moyen de verrouillage qui comprend un verrou (47) articulé par rapport à l'assise du siège qui coopère avec une crémaillère (41) solidaire de l'élément fixe.

13. Glissière suivant revendication 12 caractérisée en ce que la crémaillère (41) est constituée par le bord d'extrémité d'une des deux branches du U, le verrou basculant (47) étant articulé dans la zone de liaison entre l'armature de l'élément mobile et l'assise du siège, un levier de commande permettant d'ouvrir le verrou.

14. Glissière suivant l'une des revendications 1 à 13 caractérisée en ce que le siège du véhicule comporte une ceinture de sécurité solidarisée avec l'assise du siège en au moins un point, un moyen de reprise d'efforts (68) formant crochet permettant de relier directement l'assise à l'élément fixe (62) en cas de chocs violents.

15. Glissière suivant revendication 14 caractérisée en ce que le moyen de reprise d'efforts est un étrier (68) muni de crochets (71, 72) qui entourent en partie l'élément fixe (62) avec jeu, la largeur d'ouverture de ces crochets étant inférieure à la largeur maximale de la section de l'élément fixe engagé dans ces crochets.

16. Glissière suivant revendication 14 caractérisée en ce que le moyen de reprise d'efforts est un double crochet (81, 82) dont l'un des deux est relié à l'assise et l'autre à la base (86) de l'élément fixe, l'un des deux crochets étant un profilé parallèle à la glissière.

## Patentansprüche

1. Schiene für einen Fahrzeugsitz mit einem längsverlaufenden festen Element (2), das am Boden des Fahrzeugs angebracht ist, und einem am Sitzteil des Sitzes angebrachten beweglichen Element (3), wobei das feste Element ein Hohlprofil aufweist, in welches der gleitende Teil des beweglichen Elements eingreift, der mit dem Sitzteil des Sitzes durch eine längsverlaufende Öffnung des Hohlprofils hindurch verbunden ist, dadurch **gekennzeichnet,** daß das feste Element (2) einen im wesentlichen U-förmigen Querschnitt aufweist, dessen Basis (4) mit dem Boden (5) des Fahrzeugs verbunden ist und dessen Schenkel (9,10) jeweils wenigstens eine Nut (15,16) aufweisen, in die eine seitliche Rippe (13, 14) einer Kufe (6) aus Kunststoff eingreift, die mit einer inneren Versteifung (7) aus Metall versehen ist, die in Jede seitliche Rippe eingreifende Fortsätze (23,24,25,26,27) aufweist, wobei die Versteifung aus Metall mit dem Sitzteil durch die zwischen den beiden Schenkeln des U bestehende längsverlaufende Öffnung hindurch verbunden ist und die seitlichen Rippen der Kufe elastische Spielausgleichsmittel (17,18,21) aufweisen, die mit den gegenüberliegenden Wänden der entsprechenden Nuten zusammenwirken, um eine elastische Berührung sicherzustellen.

2. Schiene nach Anspruch 1, dadurch **gekennzeichnet,** daß die elastischen Spielausgleichsmittel Verdickungen (17,18,21) aufweisen, die in den seitlichen Rippen (13,14) der Kufe (6) in den Zonen ausgebildet sind, die in die Nuten (15, 16) eingreifen, wobei diese Verdickungen mit in ihrer Nähe in den seitlichen Rippen ausgebildeten Aussparungen (19,20,22) derart zusammenwirken, daß eine elastische Berührung mit den gegenüberliegenden Wänden der entsprechenden Nuten erreicht wird.

3. Schiene nach Anspruch 1 oder 2, dadurch **gekennzeichnet,** daß die metallene Versteifung (7) des beweglichen Elements (3) durch eine einzige Lamelle gebildet wird, die an ihrem unteren Ende, in den Kunststoff eingebettet, seitlich abgewinkelte Laschen (23,24,25,26,27) trägt, von denen einige zur einen Seite und die anderen zur anderen Seite weisen, derart, daß die seitlichen Rippen (13, 14) der Kufe (6) versteift werden.

4. Schiene nach Anspruch 3, dadurch **gekennzeichnet,** daß die Laschen (23,24,25,26,27) abwechselnd zur einen und zur anderen Seite der Rippen der Kufe (6) abgewinkelt sind.

5. Schiene nach einem der Ansprüche 1 bis 4, dadurch **gekennzeichnet,** daß die Kufe aus Kunststoff an die Versteifung aus Metall angeformt ist.

6. Schiene nach einem der Ansprüche 1 bis 5, dadurch **gekennzeichnet,** daß die Verdickungen zu einem Teil an den seitlichen Rändern der Rippen angeordnet und in Richtung auf den Grund der Nuten orientiert sind und zum anderen Teil in der Nähe dieser seitlichen Ränder der Rippen angeordnet, aber in Richtung auf die gegenüberliegenden Ränder der Nuten orientiert sind.

7. Schiene nach Anspruch 6, dadurch **gekennzeichnet,** daß die maximale Höhe jeder Verdickung (17,18), im unbelasteten Zustand gemessen, zwischen 4 und 10% der entsprechenden Breite der Nut an der Stelle dieser Verdickung beträgt.

8. Schiene nach einem der Ansprüche 1 bis 7, dadurch **gekennzeichnet,** daß der Kunststoff der Kufe einen Zusatz enthält, der eine Verringerung des Reibungskoeffizienten gestattet.

9. Schiene nach Anspruch 8, dadurch **gekennzeichnet,** daß der Zusatz Molybdändisulfid in einem Mengenanteil von 0,5 bis 5% ist.

10. Schiene nach einem der Ansprüche 1 bis 9, dadurch **gekennzeichnet,** daß der Kunststoff der Kufe einen Zusatz enthält, der eine Erhöhung der mechanischen Eigenschaften gestattet.

11. Schiene nach Anspruch 10, dadurch **gekennzeichnet,** daß der Zusatz aus Glasfasern zu einem Mengenanteil von etwa 5 bis 60% besteht.

12. Schiene nach einem der Ansprüche 1 bis 11, dadurch **gekennzeichnet,** daß sie wenigstens eine Verriegelungseinrichtung besitzt, die einen an den Sitzteil des Sitzes angelenkten Riegel (47) aufweist, der mit einer Zahnstange (41) an dem festen Element zusammenwirkt.

13. Schiene nach Anspruch 12, dadurch **gekennzeichnet,** daß die Zahnstange (41) durch den Rand am Ende eines der beiden Schenkel des U gebildet wird, wobei der schwenkbare Riegel (47) in der Verbindungszone zwischen der Versteifung des beweglichen Elements und dem Sitzteil des Sitzes angelenkt ist und ein Betätigungshebel das Öffnen des Riegels gestattet.

14. Schiene nach einem der Ansprüche 1 bis 13, dadurch **gekennzeichnet,** daß der Sitz des Fahrzeugs einen an mindestens einem Punkt an dem Sitzteil des Sitzes befestigten Sicherheitsgurt aufweist und ein hakenbildendes Kraftaufnahmemittel (68) es im Fall von heftigen Stößen gestattet, das Sitzteil direkt mit dem festen Element (62) zu verbinden.

15. Schiene nach Anspruch 14, dadurch **gekennzeichnet,** daß das Kraftaufnahmemittel ein Bügel (68) ist, der mit Haken (71,72) versehen ist, die das feste Element (62) teilweise mit Spiel umgeben, wobei die Öffnungsweite der Haken kleiner ist als die maximale Breite des Querschnitts des in diese Haken eingreifenden festen Elements.

16. Schiene nach Anspruch 14, dadurch **gekennzeichnet,** daß das Kraftaufnahmemittel ein Doppelhaken (81,82) ist, wobei einer der beiden Haken mit dem Sitzteil und der andere mit der Basis (86) des festen Elements verbunden ist und einer der beiden Haken ein parallel zu der Schiene verlaufendes Profil aufweist.

## Claims

1. Runner (1) for a vehicle seat having a fixed longitudinal member (2) secured to the floor of the vehicle and a moving member (3) secured to the seat squab, the fixed member being a hollow profiled section in which is engaged the sliding part of the moving member which is connected to the seat squab through a longitudinal opening in the hollow profiled section, characterised in that the fixed member (2) has a U-shaped cross section overall, the base (4) of which is secured to the floor (5) of the vehicle and the two arms (9, 10) of which each have at least one groove (15, 16) in which is engaged a lateral rib (13, 14) on a plastic shoe (6) which is secured to an internal metal reinforcement (7), provided with extensions (23, 24, 25, 26, 27) engaged in each lateral rib, the metal reinforcement being connected to the squab through the longitudinal opening between the two arms of the U, the lateral ribs of the shoe having elastic means for taking up play, (17, 18, 21) which interact with the facing walls of the corresponding grooves to provide elastic contact.

2. Runner according to Claim 1, characterised in that the elastic means for taking up play comprise additional thicknesses (17, 18, 21) formed on the lateral ribs (13, 14) of the shoe (6) in the regions which engage in the grooves (15, 16), these additional thicknesses interacting with recesses (19, 20, 22) produced in the vicinity of them, in the lateral ribs, so as to provide elastic contact with the facing walls of the corresponding grooves.

3. Runner according to Claim 1 or 2, characterised in that the metal reinforcement (7) of the moving member (3) consists of a single blade having at its bottom end, within the plastic material, lugs (23, 24, 25, 26, 27) folded laterally, some on one side and some on the other, so as to reinforce the lateral ribs (13, 14) of the shoe (6).

4. Runner according to Claim 3, characterised in that the lugs (23, 24, 25, 26, 27) are folded in alternation on one side and then on the other side of the ribs on the shoe (6).

5. Runner according to one of Claims 1 to 4, characterised in that the plastic shoe is fixed to the metal reinforcement by means of moulding.

6. Runner according to one of Claims 1 to 5, characterised in that the additional thicknesses are formed on the one hand on the lateral edges of the ribs and oriented in the direction of the bottoms of the grooves, and on the other hand in the vicinity of these lateral edges of the grooves but oriented in the direction of the facing walls of the grooves.

7. Runner according to Claim 6, characterised in that the maximum height of each additional thickness (17, 18), measured in the absence of any stresses, is between 4 and 10% of the corresponding width of the groove in line with this additional thickness.

8. Runner according to one of Claims 1 to 7, characterised in that the plastic material of the shoe includes an additive for reducing the coefficient of friction.

9. Runner according to Claim 8, characterised in that the additive is molybdenum disulphide in a proportion of approximately 0.5 to 5%.

10. Runner according to one of Claims 1 to 9, characterised in that the plastic material of the shoe includes an additive for improving its mechanical characteristics.

11. Runner according to Claim 10, characterised in that the additive is glass fibres in a proportion of approximately 5 to 60%.

12. Runner according to one of Claims 1 to 11, characterised in that it includes a locking means which comprises a catch (47) articulated with respect to the seat squab and interacting with a rack (41) secured to the fixed member.

13. Runner according to Claim 12, characterised in that the rack (41) is formed by the end edge of one of the two legs of the U, the tilting catch (47) being articulated in the region where the reinforcement of the moving member and the seat squab are joined, a control lever enabling the catch to be opened.

14. Runner according to one of Claims 1 to 13, characterised in that the vehicle seat has a safety belt secured to the seat squab at at least one point, a force-absorbing means (68) forming a hook enabling the squab to be connected directly to the fixed member (62) in the event of violent shocks.

15. Runner according to Claim 14, characterised in that the load absorbing means is a bracket (68) provided with hooks (71, 72) which partly surround the fixed member (62) with play, the width of opening of these hooks being less than the maximum width of the section of the fixed element engaged in these hooks.

16. Runner according to Claim 14, characterised in that the force-absorbing means is a double hook (81, 82), one of the two being connected to the squab and the other to the base (86) of the fixed member, and one of the two hooks being a profiled section parallel to the runner.
